# EUROPEAN PATENT APPLICATION

(11) **EP 3 940 285 A1**
(43) Date of publication of application: **19.01.2022**
(21) Application number: 20849043.3
(22) Date of filing: 16.06.2020
(51) Int. Cl.: F16M 11/10, F16M 11/16

(54) **ANGLE ADJUSTING DEVICE, SENSOR ASSEMBLY, AND UNMANNED AUTOMOBILE**

(30) Priority: 02.08.2019 CN 201910711071
(71) Applicant: Beijing Sankuai Online Technology Co., Ltd, Beijing 100080 (CN)
(72) Inventor: LI, Jia, Beijing 100080 (CN); LIU, Yang, Beijing 100080 (CN)
(74) Representative: Manitz Finsterwald Patent- und Rechtsanwaltspartnerschaft mbB
(86) International application number: PCT/CN2020/096319
(87) International publication number: WO 2021/022911

(57) **Abstract**

This application relates to an angle adjustment apparatus, a sensor assembly, and a driverless vehicle, and belongs to the field of mechanical technologies. The angle adjustment apparatus includes a first mounting bracket, a second mounting bracket, a crisscross shaft, a first locking ring, and a second locking ring, where the crisscross shaft includes a first adjustment shaft and a second adjustment shaft crossing each other, the first adjustment shaft is rotatably connected to the first mounting bracket, and the second adjustment shaft is rotatably connected to the second mounting bracket; the first locking ring is fixed to a fixed mounting bracket, and the second locking ring is fixed to a movable mounting bracket; one end of the first adjustment shaft close to the first locking ring is provided with a first elastic locking piece and a second elastic locking piece; and one end of the second adjustment shaft close to the second locking ring is provided with a third elastic locking piece and a fourth elastic locking piece.

## Description

### TECHNICAL FIELD

This application relates to the field of mechanical technologies, and specifically, to an angle adjustment apparatus, a sensor assembly, and a driverless vehicle.

### RELATED ART

Many electronic devices such as laser radars and cameras require angle adjustment in order to enter an optimal working state. A commonly used method is to mount the electronic device on an angle adjustment apparatus and adjust the angle of the electronic device by adjusting the angle adjustment apparatus.

An angle adjustment apparatus in the related art includes a fixed mounting bracket and a movable mounting bracket, which are fixed to each other by a bolt. The fixed mounting bracket is used for fixing the entire angle adjustment apparatus to, for example, to a frame of a vehicle. The movable mounting bracket is used for mounting an electronic device requiring angle adjustment.

In the process of implementing this application, it is found that the related art has at least the following problems:

To use the angle adjustment apparatus in the related art to adjust the angle of an electronic device, the user needs to unscrewthe bolt between the two mounting brackets first, and then rotatethe movable mounting bracket to adjust the angle. Afterrotating the electronic device to an expected angle, the user has to screw the bolt while holding the movable mounting bracketstill, which requires complicated operations.

### SUMMARY

Embodiments of this application provide an angle adjustment apparatus, a sensor assembly, and a driverless vehicle. The technical solutions of the angle adjustment apparatus, the sensor assembly, and the driverless vehicle are as follows:

According to a first aspect of the embodiments of this application, an angle adjustment apparatus is provided, including a first mounting bracket (1), a second mounting bracket (2), a crisscross shaft (3), a first locking ring (4), and a second locking ring (5), where
the crisscross shaft (3) includes a first adjustment shaft (31) and a second adjustment shaft (32) crossing each other, the first adjustment shaft (31) is rotatably connected to the first mounting bracket (1), and the second adjustment shaft (32) is rotatably connected to the second mounting bracket (2);
the first locking ring (4) is fixed to the first mounting bracket (1), and the second locking ring (5) is fixed to the second mounting bracket (2);
one end of the first adjustment shaft (31) close to the first locking ring (4) is provided with a first elastic locking piece (3121) and a second elastic locking piece (3122), and when the first elastic locking piece (3121) and the second elastic locking piece (3122) are in an open state under the action of an elastic force, outer walls of the first elastic locking piece (3121) and the second elastic locking piece (3122) are locked with an inner wall of the first locking ring (4), and an angle between the first mounting bracket (1) and the first adjustment shaft (31) is locked; and when the first elastic locking piece (3121) and the second elastic locking piece (3122) are in a closed state under the action of an external force, the outer walls of the first elastic locking piece (3121) and the second elastic locking piece (3122) are separated from the inner wall of the first locking ring (4), and the angle between the first mounting bracket (1) and the first adjustment shaft (31) is released from locking; and
one end of the second adjustment shaft (32) close to the second locking ring (5) is provided with a third elastic locking piece (3221) and a fourth elastic locking piece (3222), and when the third elastic locking piece (3221) and the fourth elastic locking piece (3222) are in the open state under the action of an elastic force, outer walls of the third elastic locking piece (3221) and the fourth elastic locking piece (3222) are locked with the inner wall of the first locking ring (4), and an angle between the second mounting bracket (2) and the second adjustment shaft (32) is locked; and when the third elastic locking piece (3221) and the fourth elastic locking piece (3222) are in the closed state under the action of an external force, the outer walls of the third elastic locking piece (3221) and the fourth elastic locking piece (3222) are separated from the inner wall of the first locking ring (4), and the angle between the second mounting bracket (2) and the second adjustment shaft (32) is released from locking.

Optionally, the inner wall of the first locking ring (4) is provided with first inner locking teeth, and an inner wall of the second locking ring (5) is provided with second inner locking teeth;
the outer walls of the first elastic locking piece (3121) and the second elastic locking piece (3122) are provided with first outer locking teeth matching the first inner locking teeth, and the outer walls of the third elastic locking piece (3221) and the fourth elastic locking piece (3222) are provided with second outer locking teeth matching the second inner locking teeth;
when the first elastic locking piece (3121) and the second elastic locking piece (3122) are in an open state under the action of an elastic force, the first outer locking teeth are locked with the first inner locking teeth, and the angle between the first mounting bracket (1) and the first adjustment shaft (31) is locked; and when the first elastic locking piece (3121) and the second elastic locking piece (3122) are in a closed state under the action of an external force, the first outer locking teeth are separated from the first inner locking teeth, and the angle between the first mounting bracket (1) and the first adjustment shaft (31) is released from locking; and
when the third elastic locking piece (3221) and the fourth elastic locking piece (3222) are in the open state under the action of an elastic force, the second outer locking teeth are locked with the second inner locking teeth, and the angle between the second mounting bracket (2) and the second adjustment shaft (32) is locked; and when the third elastic locking piece (3221) and the fourth elastic locking piece (3222) are in the closed state under the action of an external force, the second outer locking teeth are separated from the second inner locking teeth, and the angle between the second mounting bracket (2) and the second adjustment shaft (32) is released from locking.

Optionally, the first adjustment shaft (31) includes a first shaft (311) and a first adjustment handle (312), and the second adjustment shaft (32) includes a second shaft (321) and a second adjustment handle (322); and
the first elastic locking piece (3121) and the second elastic locking piece (3122) are disposed on the first adjustment handle (312), and the third elastic locking piece (3221) and the fourth elastic locking piece (3222) are disposed on the second adjustment handle (322).

Optionally, the first adjustment handle (312) further includes a first base (3123), and the second adjustment handle (322) further includes a second base (3223);
a first end of the first base (3123) is fixedly connected to a first end of the first elastic locking piece (3121) and a first end of the second elastic locking piece (3122), and a first end of the second base (3223) is fixedly connected to a first end of the third elastic locking piece (3221) and a first end of the fourth elastic locking piece (3222); and
a second end of the first base (3123) is fixedly connected to the first shaft (311), and a second end of the second base (3223) is fixedly connected to the second shaft (321).

Optionally, outer walls of the first locking ring (4) and the second locking ring (5) are each provided with scale markings, a second end of the first elastic locking piece (3121) and/or a second end of the second elastic locking piece (3122) is provided with a pointer marking, and a second end of the third elastic locking piece (3221) and/or a second end of the fourth elastic locking piece (3222) is provided with a pointer marking.

Optionally, the first adjustment shaft (31) is rotatably connected to the first mounting bracket (1) by two first bearings, and the second adjustment shaft (32) is rotatably connected to the second mounting bracket (2) by two second bearings.

Optionally, the first mounting bracket (1) is a fixed mounting bracket configured to fix the angle adjustment apparatus; and
the second mounting bracket (2) is a movable mounting bracket configured to mount an apparatus requiring angle adjustment.

Optionally, the first mounting bracket (1) is provided with a plurality of first through holes, and the plurality of first through holes are configured to allow bolts or screws to pass through, to mount the angle adjustment apparatus.

Optionally, the second mounting bracket (2) is provided with a plurality of second through holes, and the plurality of second through holes are configured to allow bolts or screws to pass through, to mount the apparatus requiring angle adjustment.

According to a second aspect of the embodiments of this application, a sensor assembly is provided, including a sensor and the angle adjustment apparatus according to the first aspect, where
the sensor is mounted on the second mounting bracket (2) of the angle adjustment apparatus.

According to a third aspect of the embodiments of this application, a driverless vehicle is provided, including a sensor, a vehicle body, and the angle adjustment apparatus according to the first aspect, where
the sensor is mounted on the second mounting bracket (2) of the angle adjustment apparatus, and the first mounting bracket (1) of the angle adjustment apparatus is mounted on a frame of the vehicle body.

The technical solutions provided in the embodiments of this application may include at least the following beneficial effects:

The angle adjustment apparatus provided in the embodiments of this application may be wholly fixed by using the first mounting bracket (1), and an electronic device requiring angle adjustment may be mounted on the second mounting bracket (2). When the angle of the electronic device is adjusted, the first elastic locking piece (3121) and the second elastic locking piece (3122) may be first gripped with hands to make the first elastic locking piece and the second elastic locking piece close. When the first elastic locking piece (3121) and the second elastic locking piece (3122) are in a closed state, the outer walls of the first elastic locking piece (3121) and the second elastic locking piece (3122) are separated from the inner wall of the first locking ring (4), so that the first adjustment shaft (31) may be rotated to adjust an angle in a first direction. After the adjustment of the angle in the first direction is finished, if the hands are released, the outer walls of the first elastic locking piece (3121) and the second elastic locking piece (3122) are locked with the inner wall of the first locking ring (4) under the action of an elastic force. In this case, the angle of the electronic device in the first direction is fixed. The third elastic locking piece (3221) and the fourth elastic locking piece (3222) may be then gripped with hands to make the third elastic locking piece and the fourth elastic locking piece close. When the third elastic locking piece (3221) and the fourth elastic locking piece (3222) are in the closed state, the outer walls of the third elastic locking piece (3221) and the fourth elastic locking piece (3222) are separated from the inner wall of the second locking ring (5), so that the second mounting bracket (2) may be rotated to adjust an angle of the electronic device in a second direction. After the adjustment of the angle in the second direction is finished, if the hands are released, the outer walls of the third elastic locking piece (3221) and the fourth elastic locking piece (3222) are locked with the inner wall of the second locking ring (5) under the action of an elastic force. In this case, the angle of the electronic device in the second direction is fixed. Therefore, the adjustment of the angles of the electronic device in the first direction and the second direction is finished. In the angle adjustment apparatus provided in the embodiments of this application, when the angle is adjusted, it is only necessary to grip the elastic locking pieces, rotate the second mounting bracket (2) or the first adjustment shaft (31), and release the hands after the adjustment is finished. Therefore, with the angle adjustment apparatus provided in the embodiments of this application, the angle adjustment can be achieved by a simple operation.

It should be understood that, the foregoing general descriptions and the following detailed descriptions are merely for exemplary and explanatory purposes and are not intended to limit this application.

### BRIEF DESCRIPTION OF THE DRAWINGS

To describe the technical solutions in the embodiments of this application or the related art more clearly, the following briefly describes the accompanying drawings required for describing the embodiments or the related art. Apparently, the accompanying drawings in the following description show some embodiments of this application, and a person of ordinary skill in the art may still derive other drawings from the accompanying drawings without creative efforts.

Accompanying drawings herein are incorporated into a specification and constitute a part of this specification, show embodiments that conform to this application, and are used for describing a principle of this application together with this specification. In the accompanying drawings:
FIG. 1 is a schematic diagram of an angle adjustment apparatus shown according to an embodiment of this application;
FIG. 2 is a front view of an angle adjustment apparatus shown according to an embodiment of this application;
FIG. 3 is a cross-sectional view of the angle adjustment apparatus that is shown in FIG. 2 in an A-A direction and shown according to an embodiment of this application;
FIG. 4 is a schematic diagram of an angle adjustment apparatus that is mounted with an electronic device (6) and shown according to an embodiment of this application;
FIG. 5 is a schematic diagram of an angle adjustment apparatus that is mounted with an electronic device (6) and shown according to an embodiment of this application;
FIG. 6 is a schematic diagram of an angle adjustment apparatus that is mounted with an electronic device (6) and shown according to an embodiment of this application;
FIG. 7 is a front view of a first locking ring (4) shown according to an embodiment of this application;
FIG. 8 is three-dimensional (3D) schematic diagram of a second locking ring (5) shown according to an embodiment of this application;
FIG. 9 is 3D schematic diagram of a first adjustment handle (312) shown according to an embodiment of this application; and
FIG. 10 is front view of a second adjustment handle (322) shown according to an embodiment of this application;

The foregoing accompanying drawings have explicit embodiments of this application, and the following provides more details. The accompanying drawings and text descriptions are not intended to limit the scope of the idea of this application in any manner, but describe the concept of this application with reference to specific embodiments for a person skilled in the art.

### DETAILED DESCRIPTION

To make objectives, technical solutions, and advantages of this application clearer, the following further describes implementations of this application in detail with reference to the accompanying drawings.

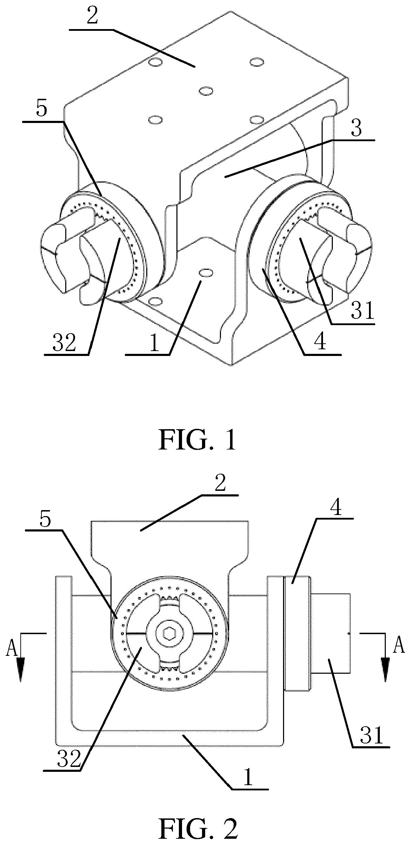

Embodiments of this application provide an angle adjustment apparatus. As shown in FIG. 1, the angle adjustment apparatus includes a first mounting bracket (1), a second mounting bracket (2), a crisscross shaft (3), a first locking ring (4), and a second locking ring (5). The crisscross shaft (3) includes a first adjustment shaft (31) and a second adjustment shaft (32) crossing each other, the first adjustment shaft (31) is rotatably connected to the first mounting bracket (1), and the second adjustment shaft (32) is rotatably connected to the second mounting bracket (2). The first locking ring (4) is fixed to the first mounting bracket (1), and the second locking ring (5) is fixed to the second mounting bracket (2).

One end of the first adjustment shaft (31) close to the first locking ring (4) is provided with a first elastic locking piece (3121) and a second elastic locking piece (3122), and when the first elastic locking piece (3121) and the second elastic locking piece (3122) are in an open state under the action of an elastic force, outer walls of the first elastic locking piece (3121) and the second elastic locking piece (3122) are locked with an inner wall of the first locking ring (4), and an angle between the first mounting bracket (1) and the first adjustment shaft (31) is locked; and when the first elastic locking piece (3121) and the second elastic locking piece (3122) are in a closed state under the action of an external force, the outer walls of the first elastic locking piece (3121) and the second elastic locking piece (3122) are separated from the inner wall of the first locking ring (4), and the angle between the first mounting bracket (1) and the first adjustment shaft (31) is released from locking.

One end of the second adjustment shaft (32) close to the second locking ring (5) is provided with a third elastic locking piece (3221) and a fourth elastic locking piece (3222), and when the third elastic locking piece (3221) and the fourth elastic locking piece (3222) are in the open state under the action of an elastic force, outer walls of the third elastic locking piece (3221) and the fourth elastic locking piece (3222) are locked with the inner wall of the first locking ring (4), and an angle between the second mounting bracket (2) and the second adjustment shaft (32) is locked; and when the third elastic locking piece (3221) and the fourth elastic locking piece (3222) are in the closed state under the action of an external force, the outer walls of the third elastic locking piece (3221) and the fourth elastic locking piece (3222) are separated from the inner wall of the first locking ring (4), and the angle between the second mounting bracket (2) and the second adjustment shaft (32) is released from locking.

Both the first mounting bracket (1) and the second mounting bracket (2) may be movable mounting brackets.

Either the first mounting bracket (1) or the second mounting bracket (2) may be a fixed mounting bracket or a movable mounting bracket. For example, the first mounting bracket (1) may be the fixed mounting bracket configured to fix the angle adjustment apparatus. The first mounting bracket (1) may be a metal component. The first mounting bracket (1) may be provided with a plurality of first through holes, and the plurality of first through holes are configured to allow bolts or screws to pass through, to mount the angle adjustment apparatus. The second mounting bracket (2) may be the movable mounting bracket configured to mount an apparatus requiring angle adjustment. The apparatus may be an electronic device, for example, a sensor. Specifically, the apparatus may be a camera, a radar, a laser radar, or the like. The second mounting bracket (2) may be a metal component. The second mounting bracket (2) may be provided with a plurality of second through holes, and the plurality of second through holes are configured to allow bolts or screws to pass through, to mount the apparatus requiring the angle adjustment.

The crisscross shaft (3) includes the first adjustment shaft (31) and the second adjustment shaft (32) crossing each other, and the first adjustment shaft (31) and the second adjustment shaft (32) may be perpendicular to each other and fixed together.

The first locking ring (4) and the second locking ring (5) may be of an annular structure, and inner walls of the first locking ring and the second locking ring have an inner locking structure used for matching and locking with an outer locking structure on the elastic locking piece, to fix an angle of the electronic device. The inner locking structure may be a plurality of grooves, and the outer locking structure may be a plurality of protrusions. The protrusions are embedded in the grooves to implement the locking of the locking ring and the elastic locking piece.

That the angle between the first mounting bracket (1) and the first adjustment shaft (31) is locked means that the first mounting bracket (1) cannot rotate relative to the first adjustment shaft (31); and that the angle between the first mounting bracket (1) and the first adjustment shaft (31) is released from locking means that the first mounting bracket (1) can rotate relative to the first adjustment shaft (31).

Similarly, that the angle between the second mounting bracket (2) and the second adjustment shaft (32) is locked means that the second mounting bracket (2) cannot rotate relative to the second adjustment shaft (32); and that the angle between the second mounting bracket (2) and the second adjustment shaft (32) is released from locking means that the second mounting bracket (2) can rotate relative to the second adjustment shaft (32).

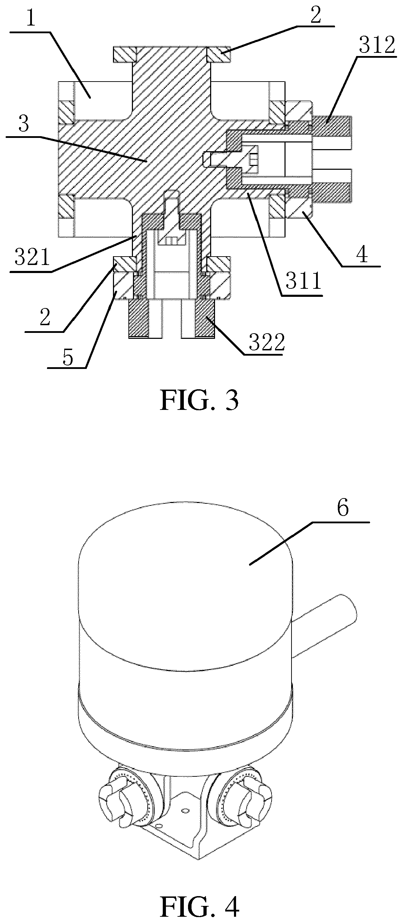

In an implementation, the movable mounting bracket may be mounted with an apparatus requiring angle adjustment. The apparatus may be an electronic device, as shown in FIG. 4 to FIG. 6. In a first case, if both the first mounting bracket (1) and the second mounting bracket (2) are movable mounting brackets, the two mounting brackets may be mounted with two apparatuses requiring the angle adjustment. In this case, the first elastic locking piece (3121) and the second elastic locking piece (3122) may be first in a closed state, and an angle of the first mounting bracket (1) relative to the first adjustment shaft (31) is adjusted by rotating the first mounting bracket (1) or the first adjustment shaft (31); and when the first elastic locking piece (3121) and the second elastic locking piece (3122) are in an open state, the angle of the first mounting bracket (1) is fixed relative to the first adjustment shaft (31). Then, the third elastic locking piece (3221) and the fourth elastic locking piece (3222) may be in the closed state, and an angle of the second mounting bracket (2) relative to the second adjustment shaft (32) is adjusted by rotating the second mounting bracket (2) or the second adjustment shaft (32); and when the third elastic locking piece (3221) and the fourth elastic locking piece (3222) are in the open state, the angle of the second mounting bracket (2) is fixed relative to the second adjustment shaft (32).

In a second case, the first mounting bracket (1) is a fixed mounting bracket, and the second mounting bracket (2) is a movable mounting bracket. When the inner wall of the first locking ring (4) is locked with the outer walls of the first elastic locking piece (3121) and the second elastic locking piece (3122), the first locking ring (4) is fixedly connected to the first adjustment shaft (31). Because the first locking ring (4) is fixedly connected to the first mounting bracket (1), and the first mounting bracket (1) is fixed, the first locking ring (4) is fixed. Consequently, the first adjustment shaft (31) is also fixed, and thus the second adjustment shaft (32) is also fixed. In this case, when the inner wall of the second locking ring (5) is locked with the outer walls of the third elastic locking piece (3221) and the fourth elastic locking piece (3222), the second locking ring (5) is fixedly connected to the second adjustment shaft (32). Because the second adjustment shaft (32) is fixed now, the second locking ring (5) is also fixed, and the second mounting bracket (2) fixedly connected to the second locking ring (5) is also fixed. Therefore, when the inner wall of the first locking ring (4) is locked with the outer walls of the first elastic locking piece (3121) and the second elastic locking piece (3), and the inner wall of the second locking ring (5) is locked with the outer walls of the third elastic locking piece (3221) and the fourth elastic locking piece (3222), the second mounting bracket (2) is fixed, and further the angle of the electronic device is also fixed.

When the inner wall of the first locking ring (4) is separated from the outer walls of the first elastic locking piece (3121) and the second elastic locking piece (3122), the first adjustment shaft (31) may be rotated to adjust an angle of the electronic device in a first direction. When the inner wall of the second locking ring (5) is separated from the outer walls of the third elastic locking piece (3221) and the fourth elastic locking piece (3222), the second mounting bracket (2) may be rotated to adjust an angle of the electronic device in a second direction.

The angle adjustment apparatus provided in the embodiments of this application may be wholly fixed by using the first mounting bracket (1), and the electronic device requiring the angle adjustment may be mounted on the second mounting bracket (2). When the angle of the electronic device is adjusted, the first elastic locking piece (3121) and the second elastic locking piece (3122) may be first gripped with hands to make the first elastic locking piece and the second elastic locking piece close. When the first elastic locking piece (3121) and the second elastic locking piece (3122) are in a closed state, the outer walls of the first elastic locking piece (3121) and the second elastic locking piece (3122) are separated from the inner wall of the first locking ring (4), so that the first adjustment shaft (31) may be rotated to adjust an angle in a first direction. After the adjustment of the angle in the first direction is finished, if the hands are released, the outer walls of the first elastic locking piece (3121) and the second elastic locking piece (3122) are locked with the inner wall of the first locking ring (4) under the action of an elastic force. In this case, the angle of the electronic device in the first direction is fixed. The third elastic locking piece (3221) and the fourth elastic locking piece (3222) may be then gripped with hands to make the third elastic locking piece and the fourth elastic locking piece close. When the third elastic locking piece (3221) and the fourth elastic locking piece (3222) are in the closed state, the outer walls of the third elastic locking piece (3221) and the fourth elastic locking piece (3222) are separated from the inner wall of the second locking ring (5), so that the second mounting bracket (2) may be rotated to adjust an angle of the electronic device in a second direction. After the adjustment of the angle in the second direction is finished, if the hands are released, the outer walls of the third elastic locking piece (3221) and the fourth elastic locking piece (3222) are locked with the inner wall of the second locking ring (5) under the action of an elastic force. In this case, the angle of the electronic device in the second direction is fixed. Therefore, the adjustment of the angles of the electronic device in the first direction and the second direction is finished. In the angle adjustment apparatus provided in the embodiments of this application, when the angle is adjusted, it is only necessary to grip the elastic locking pieces, rotate the second mounting bracket (2) or the first adjustment shaft (31), and release the hands after the adjustment is finished. Therefore, with the angle adjustment apparatus provided in the embodiments of this application, the angle adjustment can be achieved by a simple operation.

The angle adjustment apparatus provided in the embodiments of this application may adjust the angle in the first direction and also adjust the angle in the second direction, and thus is a two-degree-of-freedom angle adjustment apparatus. The first direction is a direction of rotation along the first adjustment shaft (31), and the second direction is a direction of rotation along the second adjustment shaft (32).

Optionally, to ensure the stability when the angle adjustment apparatus is locked, the inner wall of the first locking ring (4) is provided with first inner locking teeth, and an inner wall of the second locking ring (5) is provided with second inner locking teeth. The outer walls of the first elastic locking piece (3121) and the second elastic locking piece (3122) are provided with first outer locking teeth matching the first inner locking teeth, and the outer walls of the third elastic locking piece (3221) and the fourth elastic locking piece (3222) are provided with second outer locking teeth matching the second inner locking teeth.

When the first elastic locking piece (3121) and the second elastic locking piece (3122) are in an open state under the action of an elastic force, the first outer locking teeth are locked with the first inner locking teeth, and the angle between the first mounting bracket (1) and the first adjustment shaft (31) is locked; and when the first elastic locking piece (3121) and the second elastic locking piece (3122) are in a closed state under the action of an external force, the first outer locking teeth are separated from the first inner locking teeth, and the angle between the first mounting bracket (1) and the first adjustment shaft (31) is released from locking.

When the third elastic locking piece (3221) and the fourth elastic locking piece (3222) are in the open state under the action of an elastic force, the second outer locking teeth are locked with the second inner locking teeth, and the angle between the second mounting bracket (2) and the second adjustment shaft (32) is locked; and when the third elastic locking piece (3221) and the fourth elastic locking piece (3222) are in the closed state under the action of an external force, the second outer locking teeth are separated from the second inner locking teeth, and the angle between the second mounting bracket (2) and the second adjustment shaft (32) is released from locking.

The open state is a state of the first elastic locking piece (3121) and the second elastic locking piece (3122) (or the third elastic locking piece (3221) and the fourth elastic locking piece (3222)) that are subject to only an own elastic force without the external force. In this state, the first outer locking teeth and the first inner locking teeth (or the second outer locking teeth and the second inner locking teeth) are locked in contact.

The closed state is a state in which the first inner locking teeth and the first outer locking teeth (or the second outer locking teeth and the second inner locking teeth) are separated when the first elastic locking piece (3121) and the second elastic locking piece (3122) (or the third elastic locking piece (3221) and the fourth elastic locking piece (3222)) are subject to the external force, the first elastic locking piece (3121) and the second elastic locking piece (3122) (or the third elastic locking piece (3221) and the fourth elastic locking piece (3222)) are close to each other.

The shape of the first inner locking teeth and the second inner locking teeth may be the same as the shape of teeth of an internal gear. Specifically, the teeth may be involute teeth or circular arc teeth. The shape of the first outer locking teeth and the second outer locking teeth may be the same as the shape of teeth of an external gear. Specifically, the teeth may be involute teeth or circular arc teeth. In addition, the first inner locking teeth match the first outer locking teeth, and the second inner locking teeth match the second outer locking teeth.

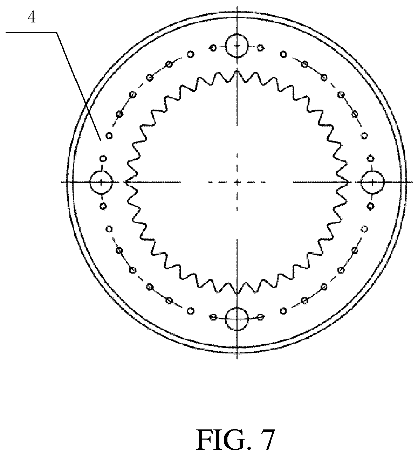

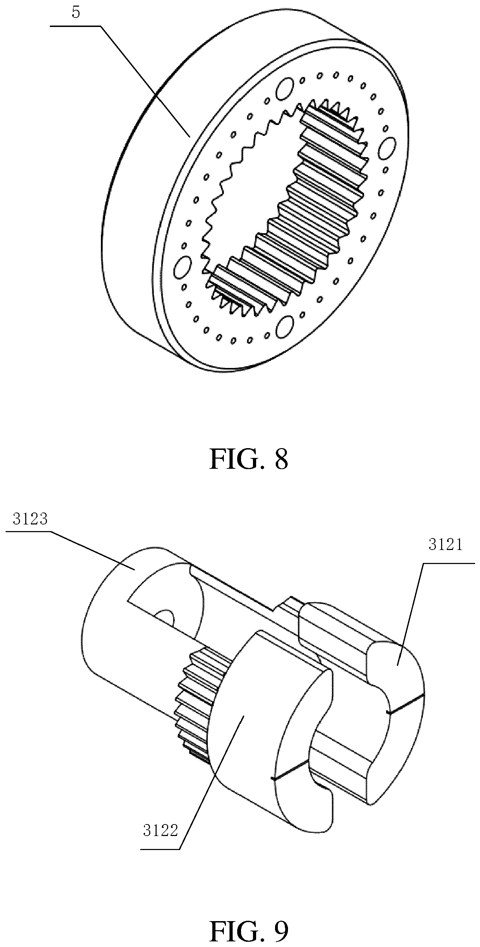

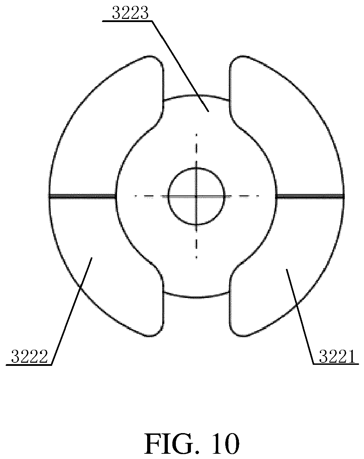

In an implementation, the shape of the first inner locking teeth and the second inner locking teeth may be shown in FIG. 7 and FIG. 8, and the shape of the first outer locking teeth and the second outer locking teeth may be shown in FIG. 9 and FIG. 10.

When the first inner locking teeth are locked with the first outer locking teeth, a plurality of protrusions on the first elastic locking piece (3121) and the second elastic locking piece (3122) are in contact with a plurality of grooves on the inner wall of the first locking ring (5).

Through the matching between the first inner locking teeth and the first outer locking teeth and the matching between the second inner locking teeth and the second outer locking teeth, the stability of the angle adjustment apparatus is better during locking. The first inner locking teeth and the first outer locking teeth are not separated, and the second inner locking teeth and the second outer locking teeth are not separated either even if the angle adjustment apparatus vibrates greatly, and consequently the angle of the electronic device is relatively stable.

Optionally, to facilitate the manufacture and mounting of the first adjustment shaft (31) and the second adjustment shaft (32), the first adjustment shaft (31) includes a first shaft (311) and a first adjustment handle (312), and the second adjustment shaft (32) includes a second shaft (321) and a second adjustment handle (322). The first elastic locking piece (3121) and the second elastic locking piece (3122) are disposed on the first adjustment handle (312), and the third elastic locking piece (3221) and the fourth elastic locking piece (3222) are disposed on the second adjustment handle (322).

The first shaft (311) crossesand is fixed to the second shaft (321).

The first adjustment handle (312) is fixedly connected to the first shaft (311), and the second adjustment handle (322) is fixedly connected to the second shaft (321).

In an implementation, by configuring the crisscross shaft (3) as three independent parts, namely, the first adjustment handle (312), the second adjustment handle (322) and a shaft (that is, the first shaft (311) and the second shaft (312) crossing and fixed together), when any part is damaged, only the damaged part, not the entire crisscross shaft (3), needs to be replaced.

In addition, because both the first adjustment handle (312) and the second adjustment handle (322) have the elastic locking pieces, the first adjustment handle (312) and the second adjustment handle (322) need to be made of an elastic and flexible material, which is different from the requirements on the material of the shaft. Therefore, the adjustment handlesare separated from the shaft, which also facilitates the manufacture of the shaft and the adjustment handles.

Optionally, to provide a fixed connection between the adjustment handles and the adjustment shafts, as shown in FIG. 9 and FIG. 10, the first adjustment handle (312) further includes a first base (3123), and the second adjustment handle (322) further includes a second base (3223). A first end of the first base (3123) is fixedly connected to a first end of the first elastic locking piece (3121) and a first end of the second elastic locking piece (3122), and a first end of the second base (3223) is fixedly connected to a first end of the third elastic locking piece (3221) and a first end of the fourth elastic locking piece (3222). A second end of the first base (3123) is fixedly connected to the first shaft (311), and a second end of the second base (3223) is fixedly connected to the second shaft (321).

The first base (3123) is fixedly connected to the first shaft (311) by screws, and the second base (3223) is fixedly connected to the second shaft (321) by screws.

In an implementation, the first base (3123) and the second base (3223) are provided with fixed through holes.

As shown in FIG. 3, one end of the first shaft (311) close to the first locking ring (4) is provided with a first hollow portion, and a bottom surface of the first hollow portion is provided with first threaded holes. The first base (3123) and the first shaft (311) are fixed together by the screws. That is, the screws pass through the fixed through holes of the first base (3123), and are screwed into the threaded holes on the bottom surface of the first hollow portion.

As shown in FIG. 3, one end of the second shaft (321) close to the second locking ring (5) is provided with a second hollow portion, and a bottom surface of the second hollow portion is provided with second threaded holes. The second base (3223) and the second shaft (312) are fixed together by the screws. That is, the screws pass through the fixed through holes of the second base (3223), and are screwed into the threaded holes on the bottom surface of the second hollow portion.

Based on the foregoing arrangement of the fixed connection by the screws, when the first adjustment handle (312) and the second adjustment handle (322) are damaged, the damaged adjustment handles may be easily replaced.

In addition, for ease of operating the adjustment handle, one end of the first adjustment handle (312) far away from the first base (3123) is further provided with a first holding portion, and one end of the second adjustment handle (322) far away from the second base (3223) is further provided with a second holding portion. The sizes of outer diameters of the first holding portion and the second holding portion are suitable for people to hold by hands. As shown in FIG. 9 and FIG. 10, the outer diameter of the first holding portion is greater than an outer diameter of a remaining portion of the first adjustment handle (312), and the outer diameter of the second holding portion is greater than an outer diameter of a remaining portion of the second adjustment handle (322).

Optionally, to facilitate the reading of the specific value of the angle to be adjusted, outer walls of the first locking ring (4) and the second locking ring (5) are each provided with scale markings, a second end of the first elastic locking piece (3121) and/or a second end of the second elastic locking piece (3122) is provided with a pointer marking, and a second end of the third elastic locking piece (3221) and/or a second end of the fourth elastic locking piece (3222) is provided with a pointer marking.

The second end of the first elastic locking piece (3121), the second end of the second elastic locking piece (3122), the second end of the third elastic locking piece (3221), and the second end of the fourth elastic locking piece (3222) are ends exposed by the elastic locking pieces.

For the first elastic locking piece (3121) and second elastic locking piece (3122), the pointer markings may be disposed on only the first elastic locking piece (3121), or may be disposed on only the second elastic locking piece (3122), or may be disposed on the first elastic locking piece (3121) and the second elastic locking piece (3122).

For the third elastic locking piece (3221) and the fourth elastic locking piece (3222), the pointer markings may be disposed on only the third elastic locking piece (3221), or may be disposed on only the fourth elastic locking piece (3222), or may be disposed on the third elastic locking piece (3221) and the fourth elastic locking piece (3222).

In an implementation, as shown in FIG. 7 and FIG. 8, for ease of reading, the scale markings may be disposed on end walls of the first locking ring (4) and the second locking ring (5). The scale markings may be a circle of grooves evenly distributed on the first locking ring (4) and the second locking ring (5). There are four grooves with larger inner diameters evenly distributed in the grooves, which may be referred to as reference grooves, and the four reference grooves respectively represent 0°, 90°, 180° and 270°. If there are eight small grooves evenly distributed between every two reference grooves, and an angle between every two grooves is 10°, theangle of the electronic device may be determined by counting the grooves. Optionally, to facilitate the reading of the angle, a corresponding angle value is marked near each groove.

As shown in FIG. 9 and FIG. 10, the pointer markings may be straight grooves on the first elastic locking piece (3121) and the second elastic locking piece (3122), or may be straight protrusions.

The use of the pointer marking and the scale marking in combination makes it easy to read the angles of the electronic device in the first direction and the second direction, and also allows for the accurate adjustment of the angle of the electronic device.

Optionally, to make the first adjustment shaft (31) and the second adjustment shaft (2) rotated smoothly, the first adjustment shaft (31) is rotatably connected to the first mounting bracket (1) by two first bearings, and the second adjustment shaft (32) is rotatably connected to the second mounting bracket (2) by two second bearings.

The two first bearings are sliding bearings or rolling bearings, and the two second bearings are sliding bearings or rolling bearings.

In an implementation, to mount the first bearing, the first mounting bracket (1) is provided with two opposite first mounting holes; and to mount the second bearing, the movable mounting bracket (2) is provided with two opposite second mounting holes.

For a situation of the sliding bearings, the sliding bearings are embedded in the first mounting hole and the second mounting hole, and an inner wall of the sliding bearing is in contact with the first adjustment shaft (31) or the second adjustment shaft (32).

For the rolling bearings, outer rings of the rolling bearings are fixed to the first mounting hole and the second mounting hole, and inner rings of the rolling bearings are fixed to the first adjustment shaft (31) and the second adjustment shaft (32). During working, for the rolling bearing on the mounting bracket as the fixed mounting bracket, the inner ring of the rolling bearing rotates while the outer ring does not rotate; and for the rolling bearing on the mounting bracket as the movable mounting bracket, the inner ring of the rolling bearing does not rotate while the outer ring rotates.

Provided with the first bearing and the second bearing, friction between the first adjustment shaft (31) and the first mounting bracket (1), and friction between the second adjustment shaft (32) and the second mounting bracket (2) can be reduced, so that the rotation of the first adjustment shaft (31) and the second mounting bracket (2) is smoother, and the angle adjustment apparatus is operated more easily.

In actual application, the working process of the angle adjustment apparatus provided in the embodiments of this application may be as follows:

The angle adjustment apparatus provided in the embodiments of this application may be applied to a driverless vehicle, and the apparatus requiring angle adjustment may be an electronic device (6), for example, a laser radar. First, the plurality of first through holes on the first mounting bracket (1) are passed through by the bolts, to fixedly connect the first mounting bracket (1) to the frame of the driverless vehicle. Then, the plurality of second through holes on the second mounting bracket (2) are passed through by the bolts, to fixedly connect the second mounting bracket (2) to the laser radar. Next, an angle of the laser radar may be adjusted. During adjustment, an angle of the laser radar in a first direction may be first adjusted, and an angle of the laser radar in a second direction is then adjusted; or an angle of the laser radar in a second direction is first adjusted, and an angle of the laser radar in a first direction is then adjusted. The working process of the angle adjustment apparatus is described below by using an example in which the angle of the laser radar in the second direction is first adjusted, and the angle of the laser radar in the first direction is then adjusted. For a detailed process, refer to FIG. 4 to FIG. 6.

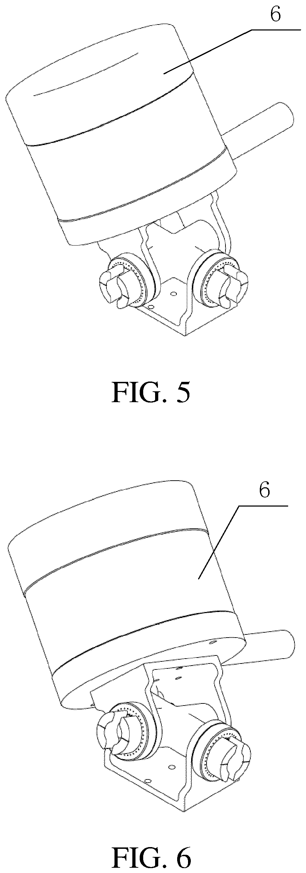

A first step is to adjust an angle of the laser radar in a second direction. The third elastic locking piece (3221) and the fourth elastic locking piece (3222) are gripped with hands to make the third elastic locking piece and the fourth elastic locking piece close until the third elastic locking piece (3221) and the fourth elastic locking piece (3222) are in a closed state. In this case, if the second inner locking teeth are separated from the second outer locking teeth, the second mounting bracket (2) may be rotated to adjust the angle of the laser radar in the second direction. After the adjustment is finished, if the hands are released, the second inner locking teeth are relocked with the second outer locking teeth under the action of an elastic force, and the angle of the laser radar in the second direction is fixed, as shown in FIG. 5.

A second step is to adjust an angle of the laser radar in a first direction. The first elastic locking piece (3121) and the second elastic locking piece (3122) are gripped with the hands to make the first elastic locking piece and the second elastic locking piece close until the first elastic locking piece (3121) and the second elastic locking piece (3122) are in the closed state. In this case, if the first inner locking teeth are separated from the first outer locking teeth, the first adjustment handle (312) may be rotated to adjust the angle of the laser radar in the first direction. After the adjustment is finished, if the hands are released, the first inner locking teeth are relocked with the first outer locking teeth under the action of an elastic force, and the angle of the laser radar in the first direction is fixed, as shown in FIG. 6.

Finally, the adjustment of the angle of the laser radar is finished.

In the angle adjustment apparatus provided in the embodiments of this application, when the angle is adjusted, it is only necessary to grip the elastic locking pieces, rotate the second mounting bracket (2) or the first adjustment shaft (31), and release the hands after the adjustment is finished. This is very simple to perform operations. In addition, the locking between the outer locking teeth and the inner locking teeth is very reliable. Therefore, the outer locking teeth and the inner locking teeth are not separated either even if the angle adjustment apparatus vibrates greatly, so that the angle of the laser radar is relatively stable. Moreover, the first locking ring (4) and the second locking ring (5) are provided with the scale markings, and the elastic locking piece is provided with the pointer marking. The scale markings and the pointer marking make it easy to read the angles of the laser radar in the first direction and the second direction, and also allow for accurate adjustment of the angle of the laser radar.

Embodiments of this application provide a sensor assembly. The sensor assembly includes a sensor and the angle adjustment apparatus according to any one of the foregoing. The sensor is mounted on the second mounting bracket (2) of the angle adjustment apparatus.

The sensor may be a camera, or may be a device such as a laser radar.

In an implementation, by applying the sensor assembly provided in the foregoing embodiments to the sensor assembly, the angle of the sensor in the sensor assembly can be adjusted conveniently.

For specific content of the angle adjustment apparatus, refer to the foregoing content. Details are not described herein again.

Embodiments of this application provide a driverless vehicle. The driverless vehicle includes a sensor, a vehicle body, and the angle adjustment apparatus according to any one of the foregoing, where the sensor is mounted on the second mounting bracket (2) of the angle adjustment apparatus, and the first mounting bracket (1) of the angle adjustment apparatus is mounted on a frame of the vehicle body.

The sensor may be a camera, or may be a device such as a laser radar.

In an implementation, by using the angle adjustment apparatus provided in the foregoing embodiments, the sensor is mounted on the frame of the vehicle body of the driverless vehicle. Therefore, it is very convenient for the sensor to adjust the angle.

For a specific structure of the angle adjustment apparatus, refer to the foregoing content. Details are not described herein again.

The foregoing descriptions are merely preferred embodiments of this application, but are not intended to limit this application. Any modification, equivalent replacement, or improvement and the like made within the spirit and principle of this application fall within the protection scope of this application.

## Claims

1. An angle adjustment apparatus, comprising a first mounting bracket (1), a second mounting bracket (2), a crisscross shaft (3), a first locking ring (4), and a second locking ring (5), wherein
the crisscross shaft (3) comprises a first adjustment shaft (31) and a second adjustment shaft (32) crossing each other, the first adjustment shaft (31) is rotatably connected to the first mounting bracket (1), and the second adjustment shaft (32) is rotatably connected to the second mounting bracket (2);
the first locking ring (4) is fixed to the first mounting bracket (1), and the second locking ring (5) is fixed to the second mounting bracket (2);
one end of the first adjustment shaft (31) close to the first locking ring (4) is provided with a first elastic locking piece (3121) and a second elastic locking piece (3122), and when the first elastic locking piece (3121) and the second elastic locking piece (3122) are in an open state under the action of an elastic force, outer walls of the first elastic locking piece (3121) and the second elastic locking piece (3122) are locked with an inner wall of the first locking ring (4), and an angle between the first mounting bracket (1) and the first adjustment shaft (31) is locked; and when the first elastic locking piece (3121) and the second elastic locking piece (3122) are in a closed state under the action of an external force, the outer walls of the first elastic locking piece (3121) and the second elastic locking piece (3122) are separated from the inner wall of the first locking ring (4), and the angle between the first mounting bracket (1) and the first adjustment shaft (31) is released from locking; and
one end of the second adjustment shaft (32) close to the second locking ring (5) is provided with a third elastic locking piece (3221) and a fourth elastic locking piece (3222), and when the third elastic locking piece (3221) and the fourth elastic locking piece (3222) are in the open state under the action of an elastic force, outer walls of the third elastic locking piece (3221) and the fourth elastic locking piece (3222) are locked with the inner wall of the first locking ring (4), and an angle between the second mounting bracket (2) and the second adjustment shaft (32) is locked; and when the third elastic locking piece (3221) and the fourth elastic locking piece (3222) are in the closed state under the action of an external force, the outer walls of the third elastic locking piece (3221) and the fourth elastic locking piece (3222) are separated from the inner wall of the first locking ring (4), and the angle between the second mounting bracket (2) and the second adjustment shaft (32) is released from locking.

2. The angle adjustment apparatus according to claim 1, wherein the inner wall of the first locking ring (4) is provided with first inner locking teeth, and an inner wall of the second locking ring (5) is provided with second inner locking teeth;
the outer walls of the first elastic locking piece (3121) and the second elastic locking piece (3122) are provided with first outer locking teeth matching the first inner locking teeth, and the outer walls of the third elastic locking piece (3221) and the fourth elastic locking piece (3222) are provided with second outer locking teeth matching the second inner locking teeth;
when the first elastic locking piece (3121) and the second elastic locking piece (3122) are in an open state under the action of an elastic force, the first outer locking teeth are locked with the first inner locking teeth, and the angle between the first mounting bracket (1) and the first adjustment shaft (31) is locked; and when the first elastic locking piece (3121) and the second elastic locking piece (3122) are in a closed state under the action of an external force, the first outer locking teeth are separated from the first inner locking teeth, and the angle between the first mounting bracket (1) and the first adjustment shaft (31) is released from locking; and
when the third elastic locking piece (3221) and the fourth elastic locking piece (3222) are in the open state under the action of an elastic force, the second outer locking teeth are locked with the second inner locking teeth, and the angle between the second mounting bracket (2) and the second adjustment shaft (32) is locked; and when the third elastic locking piece (3221) and the fourth elastic locking piece (3222) are in the closed state under the action of an external force, the second outer locking teeth are separated from the second inner locking teeth, and the angle between the second mounting bracket (2) and the second adjustment shaft (32) is released from locking.

3. The angle adjustment apparatus according to claim 2, wherein the first adjustment shaft (31) comprises a first shaft (311) and a first adjustment handle (312), and the second adjustment shaft (32) comprises a second shaft (321) and a second adjustment handle (322); and
the first elastic locking piece (3121) and the second elastic locking piece (3122) are disposed on the first adjustment handle (312), and the third elastic locking piece (3221) and the fourth elastic locking piece (3222) are disposed on the second adjustment handle (322).

4. The angle adjustment apparatus according to claim 3, wherein the first adjustment handle (312) further comprises a first base (3123), and the second adjustment handle (322) further comprises a second base (3223);
a first end of the first base (3123) is fixedly connected to a first end of the first elastic locking piece (3121) and a first end of the second elastic locking piece (3122), and a first end of the second base (3223) is fixedly connected to a first end of the third elastic locking piece (3221) and a first end of the fourth elastic locking piece (3222); and
a second end of the first base (3123) is fixedly connected to the first shaft (311), and a second end of the second base (3223) is fixedly connected to the second shaft (321).

5. The angle adjustment apparatus according to any one of claims 1 to 4, wherein outer walls of the first locking ring (4) and the second locking ring (5) are each provided with scale markings, a second end of the first elastic locking piece (3121) and/or a second end of the second elastic locking piece (3122) is provided with a pointer marking, and a second end of the third elastic locking piece (3221) and/or a second end of the fourth elastic locking piece (3222) is provided with a pointer marking.

6. The angle adjustment apparatus according to claim 1, wherein the first adjustment shaft (31) is rotatably connected to the first mounting bracket (1) by two first bearings, and the second adjustment shaft (32) is rotatably connected to the second mounting bracket (2) by two second bearings.

7. The angle adjustment apparatus according to claim 1, wherein the first mounting bracket (1) is a fixed mounting bracket configured to fix the angle adjustment apparatus; and
the second mounting bracket (2) is a movable mounting bracket configured to mount an apparatus requiring angle adjustment.

8. The angle adjustment apparatus according to claim 7, wherein the first mounting bracket (1) is provided with a plurality of first through holes, and the plurality of first through holes are configured to allow bolts or screws to pass through, to mount the angle adjustment apparatus.

9. The angle adjustment apparatus according to claim 7, wherein the second mounting bracket (2) is provided with a plurality of second through holes, and the plurality of second through holes are configured to allow bolts or screws to pass through, to mount the apparatus requiring angle adjustment.

10. A sensor assembly, comprising a sensor and the angle adjustment apparatus according to any one of claims 1 to 9, wherein
the sensor is mounted on the second mounting bracket (2) of the angle adjustment apparatus.

11. A driverless vehicle, comprising a sensor, a vehicle body, and the angle adjustment apparatus according to any one of claims 1 to 9, wherein
the sensor is mounted on the second mounting bracket (2) of the angle adjustment apparatus, and the first mounting bracket (1) of the angle adjustment apparatus is mounted on a frame of the vehicle body.
